# EUROPÄISCHE PATENTSCHRIFT

(11) **EP 3 366 104 B1**
(45) Veröffentlichungstag und Bekanntmachung des Hinweises auf die Patenterteilung: **13.05.2020**
(21) Anmeldenummer: 17208326.3
(22) Anmeldetag: 19.12.2017
(51) Int. Cl.: A01D 41/127, G01N 21/359, A01D 43/08, A01B 79/00, G01N 21/3563, A01F 25/18, G01N 21/84, G01N 21/01, G01N 21/3554, G01N 21/85

(54) **LANDWIRTSCHAFTLICHES ERNTESYSTEM**
AGRICULTURAL HARVESTING SYSTEM
SYSTÈME D'ABATTAGE AGRICOLE

(30) Priorität: 27.02.2017 DE 102017104008
(43) Veröffentlichungstag der Anmeldung: 29.08.2018
(73) Patentinhaber: CLAAS Selbstfahrende Erntemaschinen GmbH, 33428 Harsewinkel (DE)
(72) Erfinder: Kirchbeck, Alexander, 18137 Drensteinfurt (DE); Sander, Stefan, 33775 Versmold (DE)
(74) Vertreter: CLAAS Gruppe

(56) Entgegenhaltungen:
- EP-A1- 2 132 974
- EP-A2- 1 639 878
- EP-B1- 1 407 654
- DE-A1-102008 056 557
- DE-C1- 10 236 515
- US-A1- 2016 088 794

## Beschreibung

Die Erfindung betrifft ein landwirtschaftliches Erntesystem mit einer landwirtschaftlichen Erntemaschine nach dem Oberbegriff des Anspruchs 1.

Im Stand der Technik (EP 1 407 654 B1) sind landwirtschaftliche Erntesysteme mit einer Erntemaschine bekannt, die eine Sensoreinrichtung zur Inhaltsstofferfassung von landwirtschaftlichem Erntegut aufweist. Die Sensoreinrichtung verfügt über einen auf Basis der Nahinfrarotspektroskopie arbeitenden Sensor (NIR-Sensor), an dem ein Erntegutstrom vorbeiführbar ist. Unter einem Erntegutstrom wird hier durch einen Förderkanal der Erntemaschine transportiertes, mittels der Erntemaschine abgeerntetes Erntegut verstanden. Der NIR-Sensor ist dabei üblicherweise in einer Wand des Förderkanals angeordnet und erfasst wellenlängenaufgelöst die Intensität des von den vorbeiströmenden Partikeln des Erntegutstroms reflektierten Lichts. Dabei wird der Erntegutstrom mit breitwandigem, sog. weißen, Licht beaufschlagt. So können die einzelnen lichtangeregten Schwingungsmoden der nachzuweisenden Inhaltsstoffe des Ernteguts, die sich durch Absorption, Streuung bzw. Extinktion auswirken, erfasst werden und die entsprechenden gemessenen Daten einer Datenverarbeitungseinrichtung zugeführt werden, die den jeweiligen Gehalt an den interessierenden Inhaltsstoffen errechnet.

Das Erntegut wird anschließend abtransportiert und weiteren landwirtschaftlichen Arbeitsprozessen unterzogen.

Beispielsweise wird das Erntegut einer Silierung unterzogen, um Futtermittel zu erzeugen. Zu diesem Zweck wird das Erntegut, bei dem es sich insbesondere um zerkleinerte Maispflanzen handelt, in einem Silo abgelegt und dort verdichtet, um Luft herauszupressen und einen aeroben Abbau durch Pilze und Bakterien zu verhindern. Anschließend wird die verdichtete Masse abgedeckt gelagert, wodurch ein Gärprozess in Gang gesetzt wird, der die Masse in sog. Silage umwandelt.

Anstelle der Futtermittelherstellung kann aus dem Erntegut in einem alternativen, dem Ernteprozess nachfolgenden landwirtschaftlichen Arbeitsprozess auch Substrat für eine Biogasanlage hergestellt werden. Auch bei diesem sog. Gärsubstrat handelt es sich um Silage, insbesondere Maissilage, die aber auf andere Weise als Futtermittelsilage hergestellt wird. Die beiden genannten Arbeitsprozesse (Futtermittelherstellung, Substratherstellung) sind hier lediglich als Beispiele für eine Vielzahl von landwirtschaftlichen Arbeitsprozessen genannt, die dem Ernteprozess nachfolgen können.

Weitere Beispiele sind unter anderem die Bodenbearbeitung des Feldes im Zeitraum zwischen dem abgeschlossenen Ernteprozess und einem nachfolgenden Einsäen sowie weitere Arbeitsprozesse für die Bestellung des Feldes (Saatgutauswahl, Düngemittelauswahl etc.).

Die Planung und Durchführung solcher dem Ernteprozess nachfolgenden Arbeitsprozesse ist relativ aufwendig und erfordert ein gewisses Maß an Erfahrung.

Der Erfindung liegt das Problem zugrunde, ein landwirtschaftliches Erntesystem bereitzustellen, mit dem ein einem Ernteprozess nachfolgender landwirtschaftlicher Arbeitsprozess optimiert werden kann.

Das obige Problem wird gemäß einer ersten Lehre der Erfindung bei einem landwirtschaftlichen Erntesystem gemäß dem Oberbegriff von Anspruch 1 durch die Merkmale des kennzeichnenden Teils von Anspruch 1 gelöst.

Das landwirtschaftliche Erntesystem weist eine landwirtschaftliche Erntemaschine auf, bei der es sich insbesondere um einen Feldhäcksler, beispielsweise Maishäcksler, handelt. Die Erntemaschine weist einen Förderkanal für einen Erntegutstrom auf, der in einem Ernteprozess durch Abernten eines Feldbestands erzeugt wird. Mit dem Erntegutstrom ist also das durch den Förderkanal geleitete bzw. strömende Erntegut gemeint.

Darüber hinaus verfügt die Erntemaschine über eine NIR-Sensoreinrichtung mit einem NIR-Sensor (NIR: Nahinfrarotspektroskopie). Mit dem Sensor lassen sich Inhaltsstoffe und/oder Eigenschaften des Erntegutstroms, also der Erntegutpartikel, erfassen, indem der Erntegutstrom in dem Förderkanal an dem NIR-Sensor vorbeigeführt wird.

Vorschlagsgemäß weist die landwirtschaftliche Erntemaschine ferner eine Datenübertragungseinheit auf, die konfiguriert ist zur Übertragung von von der NIR-Sensoreinrichtung generierten, den vom NIR-Sensor erfassten Inhaltsstoffen und/oder Eigenschaften entsprechenden, Erntegutstromdaten an eine Offline-Datenverarbeitungseinrichtung zur zeitlich von ihrer Generierung und/oder ihrem Empfang entkoppelten Verarbeitung der Erntegutstromdaten.

Wesentlich ist dabei die Erkenntnis, dass die von der NIR-Sensoreinrichtung generierten Erntegutstromdaten auch geeignet sind bzw. dazu genutzt werden können, einen oder mehrere dem Ernteprozess nachfolgende landwirtschaftliche Arbeitsprozesse zu planen und durchzuführen, im weitesten Sinne also zu regeln. Das Funktionsspektrum der an sich bekannten NIR-Sensoreinrichtung bzw. des an sich bekannten NIR-Sensors wird also gegenüber dem Stand der Technik durch das vorschlagsgemäße landwirtschaftliche Erntesystem erheblich erweitert. Die Planung und Durchführung von dem Ernteprozess nachfolgenden Arbeitsprozessen kann damit vereinfacht und optimiert werden.

Die Offline-Datenverarbeitungseinrichtung ist insbesondere konfiguriert, zumindest auf Basis der von der NIR-Sensoreinrichtung generierten Erntegutstromdaten Steuerungsdaten zur Steuerung eines dem Ernteprozess nachfolgenden landwirtschaftlichen Arbeitsprozesses zu generieren. Dabei kann die Offline-Datenverarbeitungseinrichtung ggf. zusätzlich auf Sensordaten, insbesondere Erntegutstromdaten, mindestens eines weiteren Sensors zugreifen, der insbesondere kein NIR-Sensor ist, sondern beispielsweise eine Kamera, die insbesondere nur äußere Guteigenschaften des Erntegutstroms bzw. der strömenden Partikel erfasst (sog. "Crop Quality Camera").

In den Ansprüchen 2 bis 7 sind verschiedene Beispiele von Daten definiert, die die Offline-Datenverarbeitungseinrichtung, grundsätzlich aber auch die im weiteren noch näher beschriebene Online-Datenverarbeitungseinrichtung, zumindest auf Basis der von der NIR-Sensoreinrichtung empfangenen Erntegutstromdaten generieren kann.

So kann die Offline-Datenverarbeitungseinrichtung und/oder Online-Datenverarbeitungseinrichtung gemäß der Ausgestaltung in Anspruch 2 Daten über die chemische Zusammensetzung der Frucht des abgeernteten Feldbestands und somit über deren Qualität generieren. Zusätzlich oder alternativ kann die Offline-Datenverarbeitungseinrichtung und/oder Online-Datenverarbeitungseinrichtung auch Daten über den Eiweißgehalt, die Eiweißart, den Zuckergehalt, den Stärkegehalt, Fettgehalt (Ölgehalt) und/oder Trockenmassegehalt der Frucht bzw. des Korns generieren (Anspruch 3). Auch ist es denkbar, dass Daten über den Ernteertrag und somit die Quantität des abgeernteten Feldbestands generiert werden (Anspruch 4). Ferner kann die Offline-Datenverarbeitungseinrichtung und/oder Online-Datenverarbeitungseinrichtung konfiguriert sein, Daten über die strukturelle Zusammensetzung des abgeernteten Feldbestands (Anspruch 5) und/oder Daten über den Trockenmassegehalt, Rohfaseranteil und/oder Rohascheanteil des abgeernteten Feldbestands (Anspruch 6) zu generieren. Gemäß noch einer Ausgestaltung kann die Offline-Datenverarbeitungseinrichtung und/oder Online-Datenverarbeitungseinrichtung Daten über die volumetrische Energiedichte (J/m3) und/oder gravimetrische Energiedichte (J/kg) des abgeernteten Feldbestands generieren (Anspruch 7).

Die von der jeweiligen Datenverarbeitungseinrichtung generierten Daten werden dann mit entsprechenden Referenzdaten verglichen, die in der Datenverarbeitungseinrichtung gespeichert oder dieser zugeführt werden können. Auf Basis des Vergleichs werden dann die besagten Steuerungsdaten zur Steuerung eines bzw. des dem Ernteprozess nachfolgenden landwirtschaftlichen Arbeitsprozesses generiert.

Einige landwirtschaftliche Arbeitsprozesse, die sich mittels der Steuerungsdaten steuern lassen, die auf Basis der NIR-Sensordaten (Erntegutstromdaten) erzeugt worden sind, definiert Anspruch 8.

Gemäß der Ausgestaltung nach Anspruch 9 weist das landwirtschaftliche Erntesystem und/oder die Erntemaschine des Erntesystems auch mindestens ein landwirtschaftliches Arbeitsaggregat auf, das konfiguriert ist zur Unterstützung oder Verrichtung landwirtschaftlicher Arbeit, sowie eine Einstelleinheit zur Parametereinstellung des jeweiligen Arbeitsaggregats. Insbesondere handelt es sich bei dem jeweiligen landwirtschaftlichen Arbeitsaggregat um ein solches, das konfiguriert ist zur Handhabung, insbesondere zum Transport (Zuführeinrichtung, Fördereinrichtung etc.) und/oder zum Zerkleinern (Schneidwerk, Häckseltrommel etc.), von Erntegut im Erntegutstrom.

Zusätzlich oder alternativ zu den vorangehend beschriebenen Ausgestaltungen, die die Offline-Datenverarbeitungseinrichtung näher definiert haben, kann das landwirtschaftliche Erntesystem ferner eine Online-Datenverarbeitungseinrichtung für die Steuerung des jeweiligen Arbeitsaggregats umfassen (Anspruch 10). Entsprechende Steuerungsdaten werden von der Online-Datenverarbeitungseinrichtung, die insbesondere Bestandteil der Erntemaschine ist und vorzugsweise Teil der zuvor bereits beschriebenen NIR-Sensoreinrichtung sein kann, auf Basis der von der NIR-Sensoreinrichtung generierten, den erfassten Inhaltsstoffen und/oder Eigenschaften (Eiweißgehalt, Eiweißart, Zuckergehalt, Stärkegehalt, Fettgehalt und/oder Trockenmassegehalt etc. des Korns; Trockenmassegehalt, Rohfaseranteil, Rohascheanteil, volumetrische Energiedichte und/oder gravimetrische Energiedichte etc. des Ernteguts) entsprechenden, Erntegutstromdaten generiert.

Mit einer Online-Datenverarbeitungseinrichtung ist eine Datenverarbeitungseinrichtung gemeint, die die von der NIR-Sensoreinrichtung generierten Erntegutstromdaten im Unterschied zur Offline-Datenverarbeitungseinrichtung zeitlich an ihre Generierung und/oder an ihren Empfang gekoppelt verarbeitet. Die Verarbeitung der Erntegutstromdaten durch die Online-Datenverarbeitungseinrichtung erfolgt dabei insbesondere in Echtzeit. Der Begriff "Echtzeit" ist in diesem Zusammenhang weit zu verstehen und bedeutet, dass die Verarbeitung der empfangenen Erntegutstromdaten durch die Online-Datenverarbeitungseinrichtung in einem vorgegebenen Zeitraum ab dem Empfang und/oder der Generierung der Erntegutstromdaten erfolgt, der höchstens eine halbe Stunde, bevorzugt höchstens wenige Sekunden, z.B. höchstens 30 Sekunden, besonders bevorzugt höchstens wenige Bruchteile von Sekunden, z.B. höchstens eine halbe Sekunde, beträgt. Wesentlich ist dabei die Erkenntnis, dass die vom NIR-Sensor erfassten Inhaltsstoffe und/oder Eigenschaften und die entsprechenden von der NIR-Sensoreinrichtung generierten Erntegutstromdaten auch geeignet sind bzw. dazu genutzt werden können, mindestens ein landwirtschaftliches Arbeitsaggregat der Erntemaschine und/oder des vorschlagsgemäßen landwirtschaftlichen Erntesystems zu steuern. Der NIR-Sensor kann also mehrere weitere Sensoren ersetzen, die bislang im Stand der Technik zusätzlich notwendig waren, um die verschiedenen Arbeitsaggregate und die unterschiedlichen Prozesse einer Erntemaschine zu steuern. Es wird also das Funktionsspektrum der bekannten NIR-Sensoreinrichtung bzw. des bekannten NIR-Sensors gegenüber dem Stand der Technik durch das vorschlagsgemäße Erntesystem noch weiter vergrößert. Dadurch kann die Gesamtzahl an Sensoren der Erntemaschine reduziert werden, wodurch sich auch der Montage- und Wartungsaufwand derselben reduzieren lässt.

Die Einstelleinheit ist gemäß der Ausgestaltung der landwirtschaftlichen Erntemaschine nach Anspruch 11 konfiguriert, die Parametereinstellung des jeweiligen Arbeitsaggregats zumindest auf Basis der Steuerungsdaten durchzuführen, die die zusätzliche Online-Datenverarbeitungseinrichtung und/oder die Offline-Datenverarbeitungseinrichtung auf Basis von von der NIR-Sensoreinrichtung generierten, den vom NIR-Sensor erfassten Inhaltsstoffen und/oder Eigenschaften entsprechenden, Erntegutstromdaten (Trockenmassegehalt und/oder Stärkeanteil des Korns, Trockenmassegehalt und/oder Rohfaseranteil und/oder Rohascheanteil des Ernteguts etc.) erzeugt. Insbesondere ist die Einstelleinheit derart konfiguriert, dass die mindestens eine Parametereinstellung während desselben Ernteprozesses durchgeführt wird, in dem auch die Inhaltsstoffe und/oder Eigenschaften des Erntegutstroms von dem NIR-Sensor erfasst werden, was insbesondere zeitlich an die Generierung und/oder den Empfang der Erntegutstromdaten gekoppelt ist. Es ist damit möglich, unmittelbar auf von dem NIR-Sensor erfasste Änderungen im Feldbestand und/oder im Erntegut zu reagieren, indem ein oder mehrere Parameter des jeweiligen Arbeitsaggregats geändert bzw. das Arbeitsaggregat entsprechend verstellt wird.

Die landwirtschaftliche Erntemaschine des vorschlagsgemäßen landwirtschaftlichen Erntesystems weist gemäß der Ausgestaltung nach Anspruch 12 eine Nachzerkleinerungsvorrichtung für das Erntegut im Erntegutstrom auf, wobei die Einstelleinheit konfiguriert ist, als Parametereinstellung die Einstellung der Spaltweite und/oder der Antriebsleistung der Nachzerkleinerungsvorrichtung durchzuführen. Eine solche Nachzerkleinerungsvorrichtung dient speziell dazu, die Frucht bzw. die Körner, insbesondere die Maiskörner, aufzubrechen und damit verdaubar zu machen. Bei diesem Nachzerkleinerungsprozess muss berücksichtigt werden, dass ein Korn mit einer relativ hohen Feuchte und einem entsprechend geringen Trockenmassegehalt relativ weich bzw. gummiartig ist und sich in diesem Zustand weniger gut als ein trockeneres Korn mit einem höheren Trockenmassegehalt aufbrechen lässt. Auch der Stärkeanteil im Korn beeinflusst die Funktion der Nachzerkleinerungsvorrichtung. Der NIR-Sensor erlaubt es in diesem Fall, den Trockenmassegehalt und/oder Stärkeanteil des Korns zu bestimmen und davon abhängig eine Parametereinstellung der Nachzerkleinerungsvorrichtung zu bewirken. Beispielsweise wird, wenn ein relativ kleiner Trockenmassegehalt und/oder Stärkeanteil des Korns gemessen wird, die Spaltweite der Nachzerkleinerungsvorrichtung verringert, wohingegen dann, wenn ein relativ hoher Trockenmassegehalt und/oder Stärkeanteil gemessen wird, die Spaltweite erhöht wird. Zusätzlich oder alternativ lässt sich auch abhängig von dem gemessenen Trockenmassegehalt und/oder Stärkeanteil des Korns die Antriebsleistung der Nachzerkleinerungsvorrichtung entsprechend anpassen.

Gemäß der jeweiligen Ausgestaltung in Anspruch 13 und Anspruch 14 weist die landwirtschaftliche Erntemaschine des vorschlagsgemäßen landwirtschaftlichen Erntesystems als Arbeitsaggregat ein Schneidwerk auf, wobei die Einstelleinheit konfiguriert ist, als Parametereinstellung die Einstellung der Schnitthöhe des Ernteguts durchzuführen. Eine Änderung der Schnitthöhe kann beispielsweise gewünscht sein, wenn das Erntegut als Futtermittel weiterverarbeitet werden soll und im Erntegutstrom ein relativ hoher Rohfaseranteil vom NIR-Sensor gemessen wird. So haben die Faserbestandteile des Ernteguts keinen nennenswerten Futterwert und sind daher in diesem Fall unerwünscht. Grundsätzlich kann das Erntegut aber auch als Substrat für Biogasanlagen dienen, wobei dann ein vergleichsweise hoher Rohfaseranteil gewünscht sein kann. Grundsätzlich hat die Schnitthöhe auch einen Einfluss auf den Anteil an Rohasche, insbesondere Sand, im Erntegutstrom, der wiederum den Verschleiß innerhalb der Maschine erhöht und zu Fehlgärungen im Silo führen kann. Durch Änderung der Schnitthöhe, was über eine Parametereinstellung des Schneidwerks erfolgt, lässt sich also der Rohfaseranteil und auch der Anteil an Rohasche im Erntegutstrom verändern.

Gemäß der jeweiligen Ausgestaltung in Anspruch 15 und Anspruch 16 weist die landwirtschaftliche Erntemaschine des vorschlagsgemäßen landwirtschaftlichen Erntesystems als Arbeitsaggregate eine Zuführeinrichtung und eine Häckseltrommel auf, wobei die Einstelleinheit konfiguriert ist, als Parametereinstellung die Einstellung der Schnittlänge des Ernteguts durchzuführen. Die Schnittlänge lässt sich unter anderem durch die Geschwindigkeit der Zuführung des Ernteguts zur Häckseltrommel mit der Zuführeinrichtung und/oder durch die Drehzahl der Häckseltrommel verändern. Eine entsprechende Parametereinstellung der Zuführeinrichtung und/oder der Häckseltrommel kann auch in diesem Fall auf Basis von vom NIR-Sensor erfassten Inhaltsstoffen und/oder Eigenschaften bzw. von der NIR-Sensoreinrichtung darauf basierend generierten Erntegutstromdaten erfolgen, beispielsweise dem von dem NIR-Sensor gemessenen Trockenmassegehalt und/oder Rohfaseranteil des Ernteguts. Eine Verringerung der Schnittlänge ist beispielsweise dann erforderlich, wenn der Trockenmassegehalt und/oder Rohfaseranteil des Ernteguts, d. h. der Gesamtheit aus Körnern, Blättern und Stängeln, vergleichsweise hoch ist, was eine spätere Verdichtung in einem Silo, insbesondere Fahrsilo, erschweren würde. Ist der Trockenmassegehalt und/oder Rohfaseranteil des Ernteguts dagegen relativ gering, kann die Schnittlänge auch größer gewählt werden.

Gemäß noch einer Ausgestaltung des Erntesystems kann die Datenübertragungseinheit schließlich auch konfiguriert sein zur Übertragung von von der NIR-Sensoreinrichtung generierten, den vom NIR-Sensor erfassten Inhaltsstoffen und/oder Eigenschaften entsprechenden, Erntegutstromdaten an die Online-Datenverarbeitungseinrichtung zur zeitlich an ihre Generierung und/oder an ihren Empfang gekoppelten Verarbeitung der Erntegutstromdaten (Anspruch 17). Dabei kann die Online-Datenverarbeitungseinrichtung konfiguriert sein, zumindest auf Basis von von der NIR-Sensoreinrichtung generierten Erntegutstromdaten Steuerungsdaten zur Steuerung eines dem Ernteprozess nachfolgenden landwirtschaftlichen Arbeitsprozesses zu generieren (Anspruch 18).

Das landwirtschaftliche Erntesystem weist gemäß der Ausgestaltung nach Anspruch 19 ferner ein Ortungssystem auf. Dabei kann es sich um einen GPS- bzw. Geosensor handeln, der mit einem GPS-Satelliten kommuniziert. Insbesondere ist der GPS- bzw. Geosensor Bestandteil der landwirtschaftlichen Erntemaschine. Dabei ist die Online-Datenverarbeitungseinrichtung und/oder die Offline-Datenverarbeitungseinrichtung konfiguriert, den Erntegutstromdaten vom Ortungssystem generierte Geodaten zuzuordnen und/oder georeferenzierte Erntegutstromdaten zu verarbeiten. Mit Geodaten sind Daten gemeint, die eine räumliche Lage auf der Erdoberfläche definieren, also eine Positionsbestimmung erlauben. Die Erntegutstromdaten können darüber einer bestimmten Position auf der Erdoberfläche eindeutig zugeordnet werden (sog. Georeferenzierung). Zusätzlich oder alternativ kann das landwirtschaftliche Erntesystem auch eine Anzeigeeinrichtung aufweisen, mit der sich die Erntegutstromdaten, Referenzdaten, Steuerungsdaten und/oder Geodaten anzeigen lassen. Auch kann als weiteren Sensor eine Kamera vorgesehen sein, wobei der Sensor bzw. die Kamera konfiguriert ist, äußere Eigenschaften des Erntegutstroms zu erfassen.

Die Online-Datenverarbeitungseinrichtung und/oder die Offline-Datenverarbeitungseinrichtung kann schließlich gemäß der Ausgestaltung nach Anspruch 20 Bestandteil der landwirtschaftlichen Erntemaschine oder eines von der landwirtschaftlichen Erntemaschine (zumindest während des Ernteprozesses) räumlich entfernten, insbesondere ortsfesten, Datenverarbeitungszentrums sein, welches insbesondere Bestandteil des Erntesystems ist. Grundsätzlich ist es aber auch denkbar, dass die Online-Datenverarbeitungseinrichtung und/oder die Offline-Datenverarbeitungseinrichtung sowohl Bestandteil der landwirtschaftlichen Erntemaschine als auch des davon räumlich entfernten Datenverarbeitungszentrums ist, in diesem Fall also mehrteilig aufgebaut ist.

Nach einer weiteren Lehre gemäß Anspruch 21, der eigenständige Bedeutung zukommt, wird ein Verfahren zum Betrieb eines wie zuvor beschriebenen landwirtschaftlichen Erntesystems beansprucht, bei dem die Datenübertragungseinheit von der NIR-Sensoreinrichtung generierte, den vom NIR-Sensor erfassten Inhaltsstoffen und/oder Eigenschaften entsprechende, Erntegutstromdaten an die Offline-Datenverarbeitungseinrichtung überträgt und die Offline-Datenverarbeitungseinrichtung die Erntegutstromdaten zeitlich von ihrer Generierung und/oder ihrem Empfang entkoppelt verarbeitet.

Gemäß einer Ausgestaltung des vorschlagsgemäßen Verfahrens ist vorgesehen, dass die Online-Datenverarbeitungseinrichtung für die Steuerung des jeweiligen Arbeitsaggregats auf Basis von von der NIR-Sensoreinrichtung generierten, den vom NIR-Sensor erfassten Inhaltsstoffen und/oder Eigenschaften entsprechenden, Erntegutstromdaten Steuerungsdaten generiert, und dass die Einstelleinheit zumindest auf Basis der Steuerungsdaten eine Parametereinstellung des jeweiligen Arbeitsaggregats durchführt. (Anspruch 22).

Im Folgenden wird die Erfindung anhand einer lediglich ein Ausführungsbeispiel darstellenden Zeichnung näher erläutern. In der Zeichnung zeigt
- Fig. 1: eine schematische Draufsicht eines vorschlagsgemäßen landwirtschaftlichen Erntesystems mit einer Erntemaschine während eines Ernteprozesses und
- Fig. 2: eine schematische Seitenansicht der landwirtschaftlichen Erntemaschine des landwirtschaftlichen Erntesystems in Fig. 1.

Das vorschlagsgemäße landwirtschaftliche Erntesystem 1 und das vorschlagsgemäße Verfahren dienen zur Steuerung eines oder mehrerer landwirtschaftlicher Arbeitsprozesse, der bzw. die einem Ernteprozess nachfolgen. Verschiedene Beispiele eines dem Ernteprozess nachfolgenden landwirtschaftlichen Arbeitsprozesses werden im Weiteren näher beschrieben.

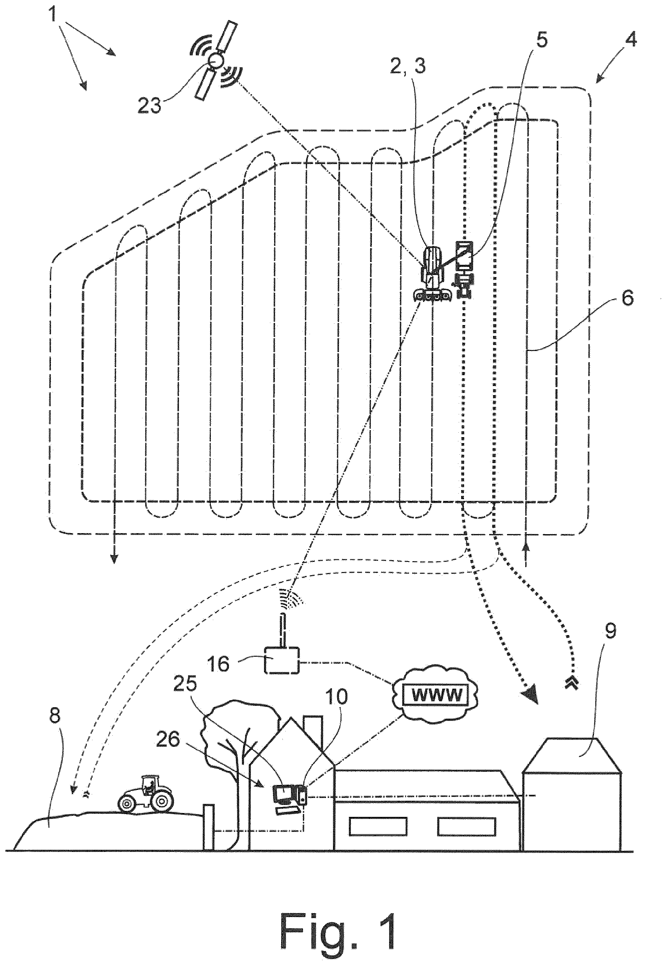

In Fig. 1 ist dargestellt, wie eine landwirtschaftliche Erntemaschine 2 eines landwirtschaftlichen Erntesystems 1, hier und vorzugsweise ein Feldhäcksler 3, ein Feld 4 zusammenhängend mit einem Transportfahrzeug 5 aberntet. Das Feld 4 ist mit entsprechenden Fahrspuren 6 dargestellt, denen die landwirtschaftliche Erntemaschine 2 folgt. Das Transportfahrzeug 5 fährt zumindest abschnittsweise neben der landwirtschaftlichen Erntemaschine 2 her, um zwischendurch Erntegut 7 aufzunehmen und abzutransportieren. Bei dem Erntegut 7 handelt es sich hier und vorzugsweise um gehäckselten Mais, der von dem Transportfahrzeug 5 entweder zu einem Silo 8 zur Futtermittelerzeugung, hier beispielhaft einem Fahrsilo 8, oder zu einer Biogasanlage 9, die ebenfalls ein Silo (nicht dargestellt) aufweisen kann, transportiert wird.

Ferner ist in Fig. 1 eine Offline-Datenverarbeitungseinrichtung 10 dargestellt, das heißt eine Datenverarbeitungseinrichtung, die die empfangenen Daten zeitlich unabhängig von ihrem Empfang und insbesondere zeitlich entkoppelt von deren Generierung verarbeiten kann. Die Offline-Datenverarbeitungseinrichtung 10 empfängt von einer Datenübertragungseinheit 11 der landwirtschaftlichen Erntemaschine 2 Erntegutstromdaten und generiert auf Basis der Erntegutstromdaten Steuerungsdaten zur Steuerung des jeweiligen dem Ernteprozess nachfolgenden landwirtschaftlichen Arbeitsprozesses.

Zur Erzeugung der Erntegutstromdaten weist die landwirtschaftliche Erntemaschine 2 eine NIR-Sensoreinrichtung 12 mit einem NIR-Sensor 13 auf, der in oder an einem Förderkanal 14 der landwirtschaftlichen Erntemaschine 2 angeordnet ist und an dem ein Erntegutstrom S vorbeiführbar ist. Mit einem Erntegutstrom S ist das durch Abernten eines Feldbestands 15 erzeugte, zerkleinerte Erntegut 7 gemeint, das durch den Förderkanal 14 strömt und anschließend von dem Transportfahrzeug 5 aufgenommen und abtransportiert wird.

Die NIR-Sensoreinrichtung 12 arbeitet auf Basis der Nahinfrarotspektroskopie und ist dadurch geeignet, Inhaltsstoffe und/oder Eigenschaften des Erntegutstroms S mit dem NIR-Sensor 13 zu erfassen und den erfassten Inhaltsstoffen und/oder Eigenschaften entsprechende Erntegutstromdaten zu generieren. Die Erntegutstromdaten werden dann von der Datenübertragungseinheit 11 der landwirtschaftlichen Erntemaschine 2 an die Offline-Datenverarbeitungseinrichtung 10 übertragen, die hier Teil eines von der landwirtschaftlichen Erntemaschine 2 räumlich beabstandeten Datenverarbeitungszentrum 26 ist. Die Übertragung erfolgt hier und vorzugsweise drahtlos, beispielsweise über ein Mobilfunknetzwerk 16, das hier mit dem Internet (www) verbunden ist, wobei auch drahtlose lokale Netzwerke (WLAN) oder andere drahtlose Kommunikationsprotokolle ebenfalls denkbar sind, um die Erntegutstromdaten an die Offline-Datenverarbeitungseinrichtung 10 zu übertragen.

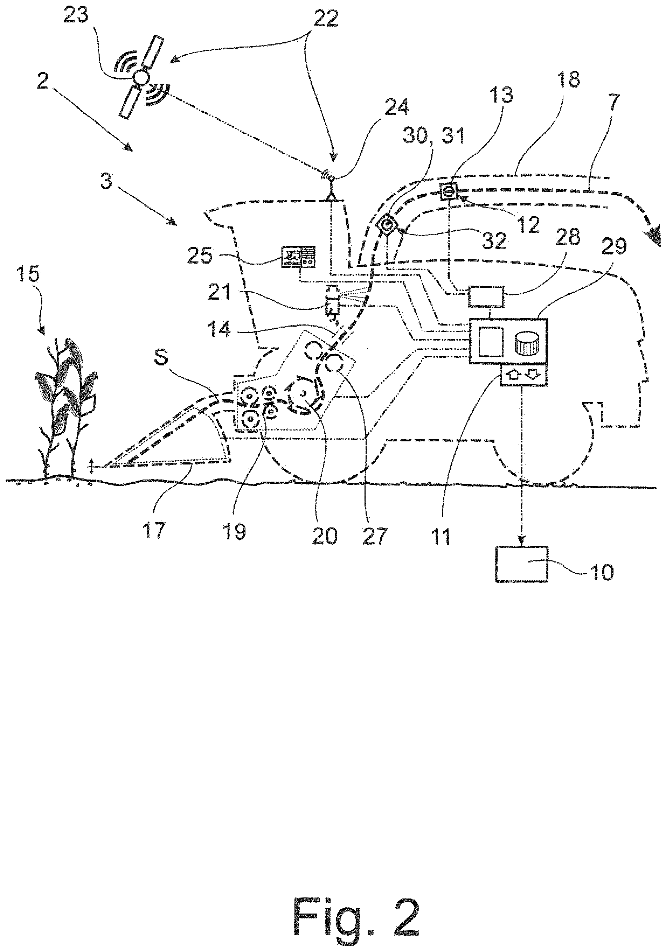

Fig. 2 zeigt eine landwirtschaftliche Erntemaschine 2 als Teil eines vorschlagsgemäßen landwirtschaftlichen Erntesystems 1 während eines Ernteprozesses, bei welchem durch Abernten eines Feldbestands 15 Erntegutstromdaten generiert und an eine Offline-Datenverarbeitungseinrichtung 10 übertragen werden. Wie in Fig. 2 zu erkennen ist, wird der Erntegutstrom S an mehreren Arbeitsaggregaten 17, 19, 20, 21 der landwirtschaftlichen Erntemaschine 2 vorbei durch einen Förderkanal 14 geführt, der am vorderen Ende der landwirtschaftlichen Erntemaschine 2 am Schneidwerk 17 beginnt und am Ende des Überladerohrs 18 endet. Vom Schneidwerk 17 aus wird der Erntegutstrom S über eine Zuführeinrichtung 19 einer Häckseltrommel 20 zugeführt, die das geschnittene Erntegut 7 weiter zerkleinert. Im weiteren Verlauf wird der Erntegutstrom S hier beispielhaft an einer Siliermittelanlage 21 vorbeigeführt, die dem Erntegutstrom ein Siliermittel zuführt. Anschließend passiert der Erntegutstrom S einen NIR-Sensor 13, der hier beispielhaft im Überladerohr 18 angeordnet ist, grundsätzlich aber auch an anderer Stelle angeordnet sein kann. Die NIR-Sensoreinrichtung 12 generiert dann den vom NIR-Sensor 13 erfassten Inhaltsstoffen und/oder Eigenschaften des Erntegutstroms S entsprechende Erntegutstromdaten, die dann von der Datenübertragungseinheit 11 insbesondere drahtlos an die externe Offline-Datenverarbeitungseinrichtung 10 übertragen werden.

Im Folgenden werden nun einige konkrete Anwendungsfälle eines vorschlagsgemäßen landwirtschaftlichen Erntesystems 1 beispielhaft beschrieben.

Bei einem Ausführungsbeispiel ist die Offline-Datenverarbeitungseinrichtung 10 konfiguriert, Daten über die chemische Zusammensetzung der Frucht des abgeernteten Feldbestands 15 zu generieren, um eine Aussage über die Qualität der Frucht und damit der Ernte zu erhalten. Der Begriff "chemische Zusammensetzung" umfasst unter anderem die stoffliche Zusammensetzung. D.h., in diesem Fall kann die Offline-Datenverarbeitungseinrichtung 10 aus den von der NIR-Sensoreinrichtung 12 generierten Erntegutstromdaten insbesondere Daten über den Eiweißgehalt und/oder die Eiweißart und/oder den Zuckergehalt und/oder den Stärkegehalt und/oder den Fettgehalt (Ölgehalt) der Frucht des abgeernteten Feldbestands 15 generieren. Unter dem Begriff "chemische Zusammensetzung" wird aber auch die elementare Zusammensetzung verstanden, was bedeutet, dass in einem weiteren Ausführungsbespiel die Offline-Datenverarbeitungseinrichtung 10 auch die Anteile verschiedener chemischer Elemente (z.B. Kohlenstoff, Sauerstoff, Wasserstoff, Stickstoff, Schwefel, Phosphor, Kalium, Calcium, Magnesium, Eisen, Bor, Mangan, Zink, Kupfer, Chlor und/oder Molybdän etc.) generieren kann.

Gemäß einem weiteren Ausführungsbeispiel kann die Offline-Datenverarbeitungseinrichtung 10 Daten über den Ernteertrag des abgeernteten Feldbestands 15, also über die Quantität bzw. Menge der eingebrachten Ernte, generieren.

Gemäß noch einem Ausführungsbeispiel ist es denkbar, dass die Offline-Datenverarbeitungseinrichtung 10 Daten über die strukturelle Zusammensetzung des abgeernteten Feldbestands 15 generiert. Der Begriff "strukturelle Zusammenfassung" umfasst beispielsweise den Trockenmassegehalt und/oder den Rohfaseranteil des abgeernteten Feldbestands 15.

Grundsätzlich ist es auch denkbar, dass die Offline-Datenverarbeitungseinrichtung 10 Daten über die volumetrische oder gravimetrische Energiedichte des abgeernteten Feldbestands 15 generiert.

Die von der Offline-Datenverarbeitungseinrichtung 10 jeweils generierten Daten werden dann mit entsprechenden Referenzdaten verglichen. Generiert die Offline-Datenverarbeitungseinrichtung 10 beispielsweise Daten über den Eiweißgehalt der Frucht, entsprechen die Referenzdaten vorgegebenen Sollwerten oder Sollwertebereichen für den Eiweißgehalt. Oder generiert die Offline-Datenverarbeitungseinrichtung 10 beispielsweise Daten über die Eiweißart der Frucht, entsprechen die Referenzdaten vorgegebenen Sollwerten oder Sollwertebereichen, die geeignet sind, eine Eiweißart zu definieren. Eventuelle Abweichungen von oder Übereinstimmungen mit den Referenzdaten, d.h. Sollwerten bzw. Sollwertebereichen, können durch den Vergleich festgestellt und zur Qualitätsbestimmung des abgeernteten Feldbestands 15 herangezogen werden. Das Ergebnis des Vergleichs zwischen den von der Offline-Datenverarbeitungseinrichtung 10 generierten Daten und den entsprechenden Referenzdaten wird dann in Form von Steuerungsdaten, die ebenfalls von der Offline-Datenverarbeitungseinrichtung 10 generiert werden, zur Steuerung mindestens eines dem Ernteprozess nachfolgenden landwirtschaftlichen Arbeitsprozesses verwendet.

Fig. 1 zeigt außerdem, dass das landwirtschaftliche Erntesystem 1 auch ein Ortungssystem 22 umfassend einen GPS-Satelliten 23 und einen an der landwirtschaftlichen Erntemaschine 2 angeordneten Geosensor 24 (GPS-Sensor) aufweist. Auf diese Weise kann die Offline-Datenverarbeitungseinrichtung 10 den Erntegutstromdaten, die von der NIR-Sensoreinrichtung 12 generiert worden sind, vom Ortungssystem 22 generierte Geodaten zuordnen und entsprechend auch georeferenzierte Erntegutstromdaten verarbeiten. Dies erlaubt es wiederum, Aussagen über Qualität und Quantität des Feldbestands 15, der zuvor abgeerntet worden ist, zu ganz individuellen Bereichen eines Feldes 4 oder auch zu einem konkreten Feld 4 innerhalb eines Schlages zu erhalten und insbesondere auch die Steuerung des nachfolgenden landwirtschaftlichen Arbeitsprozesses innerhalb des Feldes 4 bzw. innerhalb des Schlages zu variieren und darüber insgesamt die Bearbeitung des gesamten Feldes 4 bzw. des gesamten Schlages zu optimieren.

Die Erntegutstromdaten, Referenzdaten, Steuerungsdaten und/oder Geodaten können schließlich auch von einer Anzeigeeinrichtung 25 angezeigt werden.

Die von der Offline-Datenverarbeitungseinrichtung 10 generierten Steuerungsdaten, die auch eine Einschätzung der Qualität und Quantität des abgeernteten Feldbestands 15 bzw. der Frucht des abgeernteten Feldbestands 15 erlauben, können dazu dienen, als dem Ernteprozess nachfolgenden landwirtschaftlichen Arbeitsprozess einen oder mehrere der folgenden Arbeitsprozesse zu steuern:
- die Saatgutauswahl und/oder Auswahl der Fruchtfolge für einen nachfolgenden Aussaatvorgang und/oder
- die Auswahl der Saatgutmenge für einen nachfolgenden Aussaatvorgang und/oder
- die Auswahl der Saatgutverteilung auf einem nachfolgend einzusäenden Feld 4 und/oder
- die Steuerung der Saatgutverteilung auf einem Feld 4 während eines nachfolgenden Aussaatvorgangs und/oder
- die Düngemittelauswahl für einen nachfolgenden Düngungsvorgang und/oder
- die Auswahl der Düngemittelmenge für einen nachfolgenden Düngungsvorgang und/oder
- die Auswahl der Düngemittelverteilung auf einem nachfolgend zu düngenden Feld 4 und/oder
- die Steuerung der Düngemittelverteilung auf einem Feld 4 während eines nachfolgenden Düngungsvorgangs und/oder
- die Auswahl der Bodenbearbeitungsart (Pflügen, Eggen o.dgl.) eines Feldes 4 und/oder
- die Steuerung mindestens eines Arbeitsaggregats (Pflug, Egge o.dgl.) während einer Bodenbearbeitung eines Feldes 4 und/oder
- die Auswahl der Nutzungsart (Verwendung als Viehfutter oder als Substrat in einer Biogasanlage) des durch den Förderkanal 14 geströmten Ernteguts 7.

Das vorschlagsgemäße landwirtschaftliche Erntesystem 1 und das vorschlagsgemäße Verfahren können schließlich auch eine Ansteuerung und insbesondere Parametereinstellung eines oder mehrerer landwirtschaftlicher Arbeitsaggregate 17, 19, 20, 27 ermöglichen, die insbesondere Bestandteil der Erntemaschine 2 des landwirtschaftlichen Erntesystems 1 sind und zur Unterstützung oder Verrichtung landwirtschaftlicher Arbeit dienen.

In Fig. 1 ist dazu, hier als Teil der landwirtschaftlichen Erntemaschine 1, eine Online-Datenverarbeitungseinrichtung 29 dargestellt, das heißt eine Datenverarbeitungseinrichtung, die die empfangenen Daten vorzugsweise innerhalb einer festgelegten Zeitspanne nach ihrem Empfang und insbesondere nach ihrer Generierung, also in Echtzeit, verarbeiten kann. Die Online-Datenverarbeitungseinrichtung 29 empfängt von einer NIR-Sensoreinrichtung 12 der landwirtschaftlichen Erntemaschine 2 Erntegutstromdaten und generiert auf Basis der Erntegutstromdaten Steuerungsdaten für eine Einstelleinheit 28, die auf Basis dieser Daten eines oder mehrere der Arbeitsaggregate 17, 19, 20, 27 ansteuert bzw. mindestens eine Parametereinstellung des jeweiligen Arbeitsaggregats 17, 19, 20, 27 durchführt.

Die hierzu erforderlichen Erntegutstromdaten erzeugt ebenfalls die NIR-Sensoreinrichtung 12 mit dem NIR-Sensor 13. Die Erntegutstromdaten werden dann von der NIR-Sensoreinrichtung 12 der landwirtschaftlichen Erntemaschine 2 an die Online-Datenverarbeitungseinrichtung 29 übertragen, die hier Bestandteil der landwirtschaftlichen Erntemaschine 2 ist.

Im Folgenden werden nun einige konkrete Anwendungsfälle einer Online-Datenverarbeitungseinrichtung 29 der landwirtschaftlichen Erntemaschine 2 des vorschlagsgemäßen landwirtschaftlichen Erntesystems 1 beispielhaft beschrieben.

In einem Anwendungsfall erzeugt die Online-Datenverarbeitungseinrichtung 29 auf Basis der von der NIR-Sensoreinrichtung 12 generierten Erntegutstromdaten Steuerungsdaten, die es der Einstelleinheit 28 erlauben, eine Nachzerkleinerungsvorrichtung 27 einzustellen, d.h. eine Parametereinstellung durchzuführen. Als Parametereinstellung der Nachzerkleinerungsvorrichtung 27 kann die Einstelleinheit 28 eine Einstellung der Spaltweite und/oder der Antriebsleistung der Nachzerkleinerungsvorrichtung 27 durchführen.

Der NIR-Sensor 13 erlaubt es hier und vorzugsweise, den Stärkeanteil in Partikeln, die im Erntegutstrom S am NIR-Sensor 13 vorbeigeführt werden, und deren Feuchtigkeitsgehalt zu messen. Der gemessene Stärkeanteil erlaubt es der Online-Datenverarbeitungseinrichtung 29 zunächst zu ermitteln, um welchen Bestandteil der abgeernteten Pflanze es sich hierbei handelt, d. h., ob es sich hier um Körner oder aber um Faserbestandteile handelt. Ermittelt der NIR-Sensor 13 beispielsweise einen Stärkeanteil von mindestens 70 %, vorzugsweise von mindestens 80 %, weiter vorzugsweise von mindestens 90 %, erkennt die Online-Datenverarbeitungseinrichtung 29, dass es sich bei den jeweiligen Partikeln, die soeben vom NIR-Sensor 13 erfasst worden sind, um Körner oder Teile davon handeln muss. Der von dem NIR-Sensor 13 ebenfalls gemessene Feuchtigkeitsgehalt wird dann von der Online-Datenverarbeitungseinrichtung 29 dem Pflanzenbestandteil "Korn" zugeordnet, wodurch eindeutig feststeht, dass der gemessene Feuchtigkeitsgehalt und damit der Trockenmassegehalt derjenige der Körner im Erntegutstrom S ist. Der ermittelte Korn-Trockenmassegehalt kann dann von der Online-Datenverarbeitungseinrichtung 29 mit entsprechenden Sollwerten für die Trockenmasse verglichen werden, woraufhin auf Basis des Vergleichsergebnisses die Spaltweite und/oder Antriebsleistung der Nachzerkleinerungsvorrichtung 27 so angepasst wird, dass die Körner in der Nachzerkleinerungsvorrichtung 27 möglichst optimal aufgebrochen werden.

Zur Unterstützung der Steuerung eines oder mehrerer Arbeitsaggregate 17, 19, 20, 27, insbesondere zur Unterstützung der Nachzerkleinerungsvorrichtung 27, kann das vorschlagsgemäße landwirtschaftliche Erntesystem 1 zusätzlich als weiteren Sensor 30 eine sogenannte Crop Quality Camera 31 aufweisen, also eine Kamera 31, die konfiguriert ist, äußere Eigenschaften, insbesondere ausschließlich äußere Eigenschaften, des Erntegutstroms S zu erfassen. Eine entsprechende weitere Sensoreinrichtung 32 generiert auf Basis der vom weiteren Sensor 30 erfassten Ernteguteigenschaften und/oder -inhaltsstoffe ergänzende Erntegutstromdaten und überträgt diese dann an die Online-Datenverarbeitungseinrichtung 29 oder eine separate Online-Datenverarbeitungseinrichtung (nicht dargestellt), die ebenfalls zur zeitlich gekoppelten Verarbeitung der Daten, insbesondere der Verarbeitung der Daten in Echtzeit, konfiguriert ist. Die eine Online-Datenverarbeitungseinrichtung 29 oder die weitere Online-Datenverarbeitungseinrichtung generiert dann entsprechende Steuerungsdaten, die der Einstelleinheit 28, insbesondere der gemeinsamen Einstelleinheit 28, zugeführt werden, um die Ansteuerung durchzuführen. Da der NIR-Sensor 13 aber auch allein sehr zuverlässig arbeitet, kann auf eine zusätzliche Kamera, insbesondere Crop Quality Camera, auch verzichtet werden, wodurch sich die Herstellungskosten der Erntemaschine 2 reduzieren lassen.

Die Ansteuerung des jeweiligen Arbeitsaggregats 17, 19, 20, 27 bzw. die Parametereinstellung wird dann also nicht alleine auf Basis der Erntegutstromdaten der NIR-Sensoreinrichtung 12 durchgeführt, sondern zusätzlich unter Berücksichtigung weiterer Daten, insbesondere weiterer Erntegutstromdaten, also den erfassten weiteren Inhaltsstoffen und/oder Eigenschaften entsprechenden Daten.

In einem anderen Anwendungsfall generiert die Online-Datenverarbeitungseinrichtung 29 Steuerungsdaten, mit denen die Einstelleinheit 28 als Parametereinstellung die Einstellung der Schnittlänge des Ernteguts 7 im Erntegutstrom S durchführt.

Hier misst der NIR-Sensor 13 insbesondere den Feuchtigkeitsgehalt der Faserbestandteile im Erntegutstrom S, wobei die Online-Datenverarbeitungseinrichtung 29 einen Rückschluss auf den Pflanzenbestandteil "Rohfaser" durchführt, wenn der NIR-Sensor 13 einen Stärkeanteil der an ihm vorbeigeführten Partikel von weniger als 70 %, vorzugsweise von weniger als 60 %, weiter vorzugsweise von weniger als 50 %, misst. Der entsprechend vom NIR-Sensor 13 ebenfalls gemessene Feuchtigkeitsgehalt kann dann den Faserbestandteilen zugeordnet werden, was es erlaubt, den Trockenmassegehalt der Faserbestandteile zu ermitteln. Ist dieser Trockenmassegehalt relativ hoch, kann die Einstelleinheit 28 auf Basis der von der Online-Datenverarbeitungseinrichtung 29 empfangenen Steuerungsdaten die Schnittlänge verkürzen, um dadurch einen nachfolgenden Verdichtungsprozess im Silo zu optimieren. Im umgekehrten Fall erlaubt die Einstelleinheit 28, die Schnittlänge entsprechend zu verlängern, wenn der Trockenmassegehalt der Faserbestandteile vergleichsweise gering ist, diese also eine relativ hohe Feuchte aufweisen.

Eine Einstellung der Schnittlänge des Ernteguts 7 kann beispielsweise dadurch erfolgen, dass die Drehzahl der Zuführeinrichtung 19 und/oder der Häckseltrommel 20 verändert wird.

Bei noch einem weiteren Anwendungsfall ist es mittels der Online-Datenverarbeitungseinrichtung 29 und der Einstelleinheit 28 möglich, als Parametereinstellung die Einstellung der Schnitthöhe des Ernteguts 7 durchzuführen.

Eine Veränderung der Schnitthöhe kann erforderlich sein, wenn im Erntegutstrom S ein vorgegebener Anteil an Rohasche bzw. Sand überschritten wird, was der NIR-Sensor 13 messen kann. Eine Überschreitung des entsprechenden Sollwerts für den Anteil an Rohasche bzw. Sand bewirkt beispielsweise, dass die Einstelleinheit 28 den Abstand des Schneidwerks 17 vom Boden des Feldbestands 15 erhöht. Es ist auch der Fall denkbar, dass der Anteil an Rohfasern im Erntegutstrom S verringert werden soll, da ein entsprechender Sollwert überschritten worden ist, wodurch die Einstelleinheit 28 ebenfalls das Schneidwerk 17 anhebt. Soll dagegen der Anteil an Rohfasern im Erntegutstrom S erhöht werden, kann die Einstelleinheit 28 das Schneidwerk 17 automatisch absenken.

Die zuvor beschriebenen Parametereinstellungen werden bei dem vorschlagsgemäßen landwirtschaftlichen Erntesystem 1 bzw. der Erntemaschine 2 des Erntesystems 1 sowie bei dem vorschlagsgemäßen Verfahren zum Betrieb eines solchen Erntesystems 1 während desselben Ernteprozesses durchgeführt, in dem auch die Inhaltsstoffe und/oder Eigenschaften des Erntegutstroms S von dem NIR-Sensor 13 erfasst werden, so dass sich der Ernteprozess unmittelbar anpassen und optimieren lässt.

Abschließend sei nochmals hervorgehoben, dass vorschlagsgemäß sowohl die jeweilige Online-Datenverarbeitungseinrichtung als auch die Offline-Datenverarbeitungseinrichtung auf Basis von von einer NIR-Sensoreinrichtung empfangenen Erntegutstromdaten Steuerungsdaten generieren kann. Dabei kann die NIR-Sensoreinrichtung die Erntegutstromdaten auf Basis eines oder mehrerer der zuvor beschriebenen, von einem NIR-Sensor erfassten Inhaltsstoffe und/oder Eigenschaften des Erntegutstroms (Eiweißgehalt, Eiweißart, Zuckergehalt, Stärkegehalt, Fettgehalt und/oder Trockenmassegehalt etc. des Korns; Trockenmassegehalt, Rohfaseranteil, Rohascheanteil, volumetrische Energiedichte und/oder gravimetrische Energiedichte etc. des Ernteguts) generieren.

Grundsätzlich ist es vorstellbar, dass sowohl die jeweilige Online-Datenverarbeitungseinrichtung als auch die Offline-Datenverarbeitungseinrichtung konfiguriert ist, auf Basis der empfangenen Erntegutstromdaten mindestens eine Parametereinstellung mindestens eines wie zuvor beschriebenen Arbeitsaggregats und/oder eine Steuerung mindestens eines wie zuvor beschriebenen, dem Ernteprozess nachfolgenden landwirtschaftlichen Arbeitsprozesses durchzuführen.

### Bezugszeichenliste

- 1: landwirtschaftliches Erntesystem
- 2: landwirtschaftliche Erntemaschine
- 3: Feldhäcksler
- 4: Feld
- 5: Transportfahrzeug
- 6: Fahrspur
- 7: Erntegut
- 8: Silo
- 9: Biogasanlage
- 10: Offline-Datenverarbeitungseinrichtung
- 11: Datenübertragungseinheit
- 12: NIR-Sensoreinrichtung
- 13: NIR-Sensor
- 14: Förderkanal
- 15: Feldbestand
- 16: Mobilfunknetzwerk
- 17: Schneidwerk
- 18: Überladerohr
- 19: Zuführeinrichtung
- 20: Häckseltrommel
- 21: Siliermittelanlage
- 22: Ortungssystem
- 23: GPS-Satellit
- 24: Geosensor
- 25: Anzeigeeinrichtung
- 26: Datenverarbeitungszentrum
- 27: Nachzerkleinerungsvorrichtung, Cracker
- 28: Einstelleinheit
- 29: Online-Datenverarbeitungseinheit
- 30: weiterer Sensor
- 31: Kamera
- 32: weitere Sensoreinrichtung
- S: Erntegutstrom

## Patentansprüche

1. Landwirtschaftliches Erntesystem (1) mit einer landwirtschaftlichen Erntemaschine (2), insbesondere einem Feldhäcksler (3), die bzw. der einen Förderkanal (14) für einen in einem Ernteprozess durch Abernten eines Feldbestands (15) erzeugten Erntegutstrom (S) aufweist sowie eine NIR-Sensoreinrichtung (12) mit einem NIR-Sensor (13), der konfiguriert ist Inhaltsstoffe und/oder Eigenschaften des Erntegutstroms (S) zu erfassen, wobei der Erntegutstrom (S) in dem Förderkanal (14) an dem NIR-Sensor (13) vorbeigeführt wird,
**dadurch gekennzeichnet,**
**dass** die landwirtschaftliche Erntemaschine (2) ferner eine Datenübertragungseinheit (11) aufweist, die konfiguriert ist die von der NIR-Sensoreinrichtung (12) generierten, den vom NIR-Sensor (13) erfassten Inhaltsstoffen und/oder Eigenschaften entsprechenden, Erntegutstromdaten an eine Offline-Datenverarbeitungseinrichtung (10) zu übertragen und dort die Erntegutstromdaten zeitlich von ihrer Generierung und/oder ihrem Empfang entkoppelt zu verarbeiten.

2. Landwirtschaftliches Erntesystem (1) nach Anspruch 1, **dadurch gekennzeichnet, dass** die Offline-Datenverarbeitungseinrichtung (10) konfiguriert ist, zumindest auf Basis der von der NIR-Sensoreinrichtung (12) generierten Erntegutstromdaten Daten über die chemische Zusammensetzung der Frucht des abgeernteten Feldbestands (15) zu generieren, einen Vergleich der generierten Daten mit Referenzdaten durchzuführen und auf Basis des Vergleichs Steuerungsdaten zur Steuerung eines dem Ernteprozess nachfolgenden landwirtschaftlichen Arbeitsprozesses zu generieren.

3. Landwirtschaftliches Erntesystem (1) nach Anspruch 1 oder 2, **dadurch gekennzeichnet, dass** die Offline-Datenverarbeitungseinrichtung (10) konfiguriert ist, zumindest auf Basis der von der NIR-Sensoreinrichtung (12) generierten Erntegutstromdaten Daten über den Eiweißgehalt und/oder die Eiweißart und/oder den Zuckergehalt und/oder den Stärkegehalt und/oder den Fettgehalt und/oder Trockenmassegehalt der Frucht des abgeernteten Feldbestands (15) und/oder Ernteguts (7) zu generieren, einen Vergleich der generierten Daten mit Referenzdaten durchzuführen und auf Basis des Vergleichs Steuerungsdaten zur Steuerung eines dem Ernteprozess nachfolgenden landwirtschaftlichen Arbeitsprozesses zu generieren.

4. Landwirtschaftliches Erntesystem (1) nach einem der vorhergehenden Ansprüche, **dadurch gekennzeichnet, dass** die Offline-Datenverarbeitungseinrichtung (10) konfiguriert ist, zumindest auf Basis der von der NIR-Sensoreinrichtung (12) generierten Erntegutstromdaten Daten über den Ernteertrag des abgeernteten Feldbestands (15) zu generieren, einen Vergleich der generierten Daten mit Referenzdaten durchzuführen und auf Basis des Vergleichs Steuerungsdaten zur Steuerung eines dem Ernteprozess nachfolgenden landwirtschaftlichen Arbeitsprozesses zu generieren.

5. Landwirtschaftliches Erntesystem (1) nach einem der vorhergehenden Ansprüche, **dadurch gekennzeichnet, dass** die Offline-Datenverarbeitungseinrichtung (10) konfiguriert ist, zumindest auf Basis der von der NIR-Sensoreinrichtung (12) generierten Erntegutstromdaten Daten über die strukturelle Zusammensetzung des abgeernteten Feldbestands (15) und/oder Ernteguts (7) zu generieren, einen Vergleich der generierten Daten mit Referenzdaten durchzuführen und auf Basis des Vergleichs Steuerungsdaten zur Steuerung eines dem Ernteprozess nachfolgenden landwirtschaftlichen Arbeitsprozesses zu generieren.

6. Landwirtschaftliches Erntesystem (1) nach einem der vorhergehenden Ansprüche, **dadurch gekennzeichnet, dass** die Offline-Datenverarbeitungseinrichtung (10) konfiguriert ist, zumindest auf Basis der von der NIR-Sensoreinrichtung (12) generierten Erntegutstromdaten Daten über den Trockenmassegehalt und/oder den Rohfaseranteil und/oder Rohascheanteil des abgeernteten Feldbestands (15) und/oder Ernteguts (7) zu generieren, einen Vergleich der generierten Daten mit Referenzdaten durchzuführen und auf Basis des Vergleichs Steuerungsdaten zur Steuerung eines dem Ernteprozess nachfolgenden landwirtschaftlichen Arbeitsprozesses zu generieren.

7. Landwirtschaftliches Erntesystem (1) nach einem der vorhergehenden Ansprüche, **dadurch gekennzeichnet, dass** die Offline-Datenverarbeitungseinrichtung (10) konfiguriert ist, zumindest auf Basis der von der NIR-Sensoreinrichtung (12) generierten Erntegutstromdaten Daten über die volumetrische Energiedichte und/oder gravimetrische Energiedichte des abgeernteten Feldbestands (15) und/oder Ernteguts (7) zu generieren, einen Vergleich der generierten Daten mit Referenzdaten durchzuführen und auf Basis des Vergleichs Steuerungsdaten zur Steuerung eines dem Ernteprozess nachfolgenden landwirtschaftlichen Arbeitsprozesses zu generieren.

8. Landwirtschaftliches Erntesystem (1) nach einem der vorhergehenden Ansprüche, **dadurch gekennzeichnet, dass** der landwirtschaftliche Arbeitsprozess folgendes umfasst:
- die Saatgutauswahl und/oder Auswahl der Fruchtfolge für einen nachfolgenden Aussaatvorgang und/oder
- die Auswahl der Saatgutmenge für einen nachfolgenden Aussaatvorgang und/oder
- die Auswahl der Saatgutverteilung auf einem nachfolgend einzusäenden Feld (4) und/oder
- die Steuerung der Saatgutverteilung auf einem Feld (4) während eines nachfolgenden Aussaatvorgangs und/oder
- die Düngemittelauswahl für einen nachfolgenden Düngungsvorgang und/oder
- die Auswahl der Düngemittelmenge für einen nachfolgenden Düngungsvorgang und/oder
- die Auswahl der Düngemittelverteilung auf einem nachfolgend zu düngenden Feld (4) und/oder
- die Steuerung der Düngemittelverteilung auf einem Feld (4) während eines nachfolgenden Düngungsvorgangs und/oder
- die Auswahl der Bodenbearbeitungsart eines Feldes (4) und/oder
- die Steuerung mindestens eines Arbeitsaggregats (17, 19, 20, 21) während einer Bodenbearbeitung eines Feldes (4) und/oder
- die Auswahl der Nutzungsart des durch den Förderkanal (14) geströmten Ernteguts (7).

9. Landwirtschaftliches Erntesystem (1) nach einem der vorhergehenden Ansprüche, **dadurch gekennzeichnet, dass** das landwirtschaftliche Erntesystem (1) und/oder die Erntemaschine (2) ferner mindestens ein landwirtschaftliches Arbeitsaggregat (17, 19, 20, 27) aufweist, das konfiguriert ist zur Unterstützung oder Verrichtung landwirtschaftlicher Arbeit, sowie eine Einstelleinheit (28) zur Parametereinstellung des jeweiligen Arbeitsaggregats (17, 19, 20, 27).

10. Landwirtschaftliches Erntesystem (1) nach Anspruch 9, **dadurch gekennzeichnet, dass** das landwirtschaftliche Erntesystem (1) ferner eine Online-Datenverarbeitungseinrichtung (29) für die Steuerung des jeweiligen Arbeitsaggregats (17, 19, 20, 27) aufweist, die konfiguriert ist, auf Basis von von der NIR-Sensoreinrichtung (12) generierten, den vom NIR-Sensor (13) erfassten Inhaltsstoffen und/oder Eigenschaften entsprechenden, Erntegutstromdaten
- Steuerungsdaten und/oder
- Daten über den Eiweißgehalt und/oder die Eiweißart und/oder den Zuckergehalt und/oder den Stärkegehalt und/oder den Fettgehalt und/oder Trockenmassegehalt der Frucht des abgeernteten Feldbestands (15) und/oder Ernteguts (7) und/oder
- Daten über den Ernteertrag des abgeernteten Feldbestands (15) und/oder
- Daten über die strukturelle Zusammensetzung des abgeernteten Feldbestands (15) und/oder Ernteguts (7) und/oder
- Daten über den Trockenmassegehalt und/oder den Rohfaseranteil und/oder Rohascheanteil des abgeernteten Feldbestands (15) und/oder Ernteguts (7) und/oder
- Daten über die volumetrische Energiedichte und/oder gravimetrische Energiedichte des abgeernteten Feldbestands (15) und/oder Ernteguts (7) zu generieren.

11. Landwirtschaftliches Erntesystem (1) nach Anspruch 9 oder 10, **dadurch gekennzeichnet, dass** die Einstelleinheit (28) konfiguriert ist, zumindest auf Basis der Steuerungsdaten bzw. Daten der Online-Datenverarbeitungseinrichtung (29) und/oder der Offline-Datenverarbeitungseinrichtung (10) mindestens eine Parametereinstellung des jeweiligen Arbeitsaggregats (17, 19, 20, 27) durchzuführen.

12. Landwirtschaftliches Erntesystem (1) nach einem der Ansprüche 9 bis 11, **dadurch gekennzeichnet, dass** die landwirtschaftliche Erntemaschine (2) als Arbeitsaggregat (27) eine Nachzerkleinerungsvorrichtung (27) für das Erntegut (7) im Erntegutstrom (S) aufweist, dass die Online-Datenverarbeitungseinrichtung (29) und/oder die Offline-Datenverarbeitungseinrichtung (10) konfiguriert ist, Daten über den Trockenmassegehalt und/oder Stärkeanteil der Frucht des abgeernteten Feldbestands (15) zu generieren, einen Vergleich der generierten Daten mit Referenzdaten durchzuführen und auf Basis des Vergleichs die Steuerungsdaten zur Durchführung der Parametereinstellung der Nachzerkleinerungsvorrichtung (27) zu generieren, und dass die Einstelleinheit (28) konfiguriert ist, als Parametereinstellung die Einstellung der Spaltweite und/oder der Antriebsleistung der Nachzerkleinerungsvorrichtung (27) durchzuführen.

13. Landwirtschaftliches Erntesystem (1) nach einem der Ansprüche 9 bis 12, **dadurch gekennzeichnet, dass** die landwirtschaftliche Erntemaschine (2) als Arbeitsaggregat (17) ein Schneidwerk (17) aufweist, dass die Online-Datenverarbeitungseinrichtung (29) und/oder die Offline-Datenverarbeitungseinrichtung (10) konfiguriert ist, Daten über den Rohfaseranteil des abgeernteten Feldbestands (15) zu generieren, einen Vergleich der generierten Daten mit Referenzdaten durchzuführen und auf Basis des Vergleichs die Steuerungsdaten zur Durchführung der Parametereinstellung des Schneidwerks (17) zu generieren, und dass die Einstelleinheit (28) konfiguriert ist, als Parametereinstellung die Einstellung der Schnitthöhe des Ernteguts (7) durchzuführen.

14. Landwirtschaftliches Erntesystem (1) nach einem der Ansprüche 9 bis 13, **dadurch gekennzeichnet, dass** die landwirtschaftliche Erntemaschine (2) als Arbeitsaggregat (17) ein Schneidwerk (17) aufweist, dass die Online-Datenverarbeitungseinrichtung (29) und/oder die Offline-Datenverarbeitungseinrichtung (10) konfiguriert ist, Daten über den Rohascheanteil des abgeernteten Feldbestands (15) zu generieren, einen Vergleich der generierten Daten mit Referenzdaten durchzuführen und auf Basis des Vergleichs die Steuerungsdaten zur Durchführung der Parametereinstellung des Schneidwerks (17) zu generieren, und dass die Einstelleinheit (28) konfiguriert ist, als Parametereinstellung die Einstellung der Schnitthöhe des Ernteguts (7) durchzuführen.

15. Landwirtschaftliches Erntesystem (1) nach einem der Ansprüche 9 bis 14, **dadurch gekennzeichnet, dass** die landwirtschaftliche Erntemaschine (2) als Arbeitsaggregate (19, 20) eine Zuführeinrichtung (19) und eine Häckseltrommel (20) aufweist, dass die Online-Datenverarbeitungseinrichtung (29) und/oder die Offline-Datenverarbeitungseinrichtung (10) konfiguriert ist, Daten über den Trockenmassegehalt des abgeernteten Feldbestands (15) zu generieren, einen Vergleich der generierten Daten mit Referenzdaten durchzuführen und auf Basis des Vergleichs die Steuerungsdaten zur Durchführung der Parametereinstellung der Zuführeinrichtung (19) und/oder der Häckseltrommel (20) zu generieren, und dass die Einstelleinheit (28) konfiguriert ist, als Parametereinstellung die Einstellung der Schnittlänge des Ernteguts (7) durchzuführen.

16. Landwirtschaftliches Erntesystem (1) nach einem der Ansprüche 9 bis 15, **dadurch gekennzeichnet, dass** die landwirtschaftliche Erntemaschine (2) als Arbeitsaggregate (19, 20) eine Zuführeinrichtung (19) und eine Häckseltrommel (20) aufweist, dass die Online-Datenverarbeitungseinrichtung (29) und/oder die Offline-Datenverarbeitungseinrichtung (10) konfiguriert ist, Daten über den Rohfaseranteil des abgeernteten Feldbestands (15) zu generieren, einen Vergleich der generierten Daten mit Referenzdaten durchzuführen und auf Basis des Vergleichs die Steuerungsdaten zur Durchführung der Parametereinstellung der Zuführeinrichtung (19) und/oder der Häckseltrommel (20) zu generieren, und dass die Einstelleinheit (28) konfiguriert ist, als Parametereinstellung die Einstellung der Schnittlänge des Ernteguts (7) durchzuführen.

17. Landwirtschaftliches Erntesystem (1) nach einem der Ansprüche 10 bis 16, **dadurch gekennzeichnet, dass** die Datenübertragungseinheit (11) ferner konfiguriert ist zur Übertragung von von der NIR-Sensoreinrichtung (12) generierten, den vom NIR-Sensor (13) erfassten Inhaltsstoffen und/oder Eigenschaften entsprechenden, Erntegutstromdaten an die Online-Datenverarbeitungseinrichtung (29) zur zeitlich an ihre Generierung und/oder an ihren Empfang gekoppelten Verarbeitung der Erntegutstromdaten.

18. Landwirtschaftliches Erntesystem (1) nach einem der Ansprüche 10 bis 17, **dadurch gekennzeichnet, dass** die Online-Datenverarbeitungseinrichtung (29) konfiguriert ist, zumindest auf Basis von von der NIR-Sensoreinrichtung (12) generierten Erntegutstromdaten Steuerungsdaten zur Steuerung eines dem Ernteprozess nachfolgenden landwirtschaftlichen Arbeitsprozesses zu generieren.

19. Landwirtschaftliches Erntesystem (1) nach einem der vorhergehenden Ansprüche, **dadurch gekennzeichnet, dass** es ferner
- als weiteren Sensor (30) eine Kamera (31) aufweist, wobei der Sensor (30) bzw. die Kamera (31) konfiguriert ist, äußere Eigenschaften des Erntegutstroms (S) zu erfassen, und/oder
- ein Ortungssystem (22) und die Offline-Datenverarbeitungseinrichtung (10) und/oder die Online-Datenverarbeitungseinrichtung (29) konfiguriert ist, den Erntegutstromdaten vom Ortungssystem (22) generierte Geodaten zuzuordnen und/oder georeferenzierte Erntegutstromdaten zu verarbeiten, und/oder
- eine Anzeigeeinrichtung (25), die konfiguriert ist zur Anzeige der Erntegutstromdaten, der Referenzdaten, der Steuerungsdaten und/oder der Geodaten.

20. Landwirtschaftliches Erntesystem (1) nach einem der vorhergehenden Ansprüche, **dadurch gekennzeichnet, dass** die Offline-Datenverarbeitungseinrichtung (10) und/oder die Online-Datenverarbeitungseinrichtung (29) Bestandteil der landwirtschaftlichen Erntemaschine (2) und/oder eines von der landwirtschaftlichen Erntemaschine (2) räumlich entfernten Datenverarbeitungszentrums (26) ist.

21. Verfahren zum Betrieb eines landwirtschaftlichen Erntesystems (1) nach Anspruch 1, **dadurch gekennzeichnet, dass** die Datenübertragungseinheit (11) von der NIR-Sensoreinrichtung (12) generierte, den vom NIR-Sensor (13) erfassten Inhaltsstoffen und/oder Eigenschaften entsprechende, Erntegutstromdaten an die Offline-Datenverarbeitungseinrichtung (10) überträgt und die Offline-Datenverarbeitungseinrichtung (10) die Erntegutstromdaten zeitlich von ihrer Generierung und/oder ihrem Empfang entkoppelt verarbeitet.

22. Verfahren nach Anspruch 21, **dadurch gekennzeichnet, dass** die Online-Datenverarbeitungseinrichtung (29) für die Steuerung des jeweiligen Arbeitsaggregats (17, 19, 20, 27) auf Basis von von der NIR-Sensoreinrichtung (12) generierten, den vom NIR-Sensor (13) erfassten Inhaltsstoffen und/oder Eigenschaften entsprechenden, Erntegutstromdaten Steuerungsdaten generiert, und dass die Einstelleinheit (28) zumindest auf Basis der Steuerungsdaten eine Parametereinstellung des jeweiligen Arbeitsaggregats (17, 19, 20, 27) durchführt.

## Claims

1. An agricultural harvesting system (1) with an agricultural harvesting machine (2), in particular a forage harvester (3), which has a conveying channel (14) for a flow of crop (S) produced in a harvesting process by harvesting a field crop (15), as well as a NIR sensor device (12) with a NIR sensor (13) which is configured to measure constituents and/or properties of the flow of crop (S), wherein the flow of crop (S) in the conveying channel (14) is fed past the NIR sensor (13),
**characterized in that**
the agricultural harvesting machine (2) furthermore has a data transmission unit (11) which is configured to transmit the crop flow data generated by the NIR sensor device (12) and corresponding to the constituents and/or properties measured by the NIR sensor (13) to an offline data processing device (10) and to process the crop flow data therein in a manner which is temporally decoupled from its generation and/or its reception.

2. The agricultural harvesting system (1) according to claim 1, **characterized in that** the offline data processing device (10) is configured to generate data regarding the chemical composition of the fruit from the harvested field crop (15) at least on the basis of the crop flow data generated by the NIR sensor device (12), to carry out a comparison of the generated data with reference data and, based on the comparison, to generate control data for controlling an agricultural working process which is subsequent to the harvesting process.

3. The agricultural harvesting system (1) according to claim 1 or claim 2, **characterized in that** the offline data processing device (10) is configured to generate data regarding the protein content and/or the type of protein and/or the sugar content and/or the starch content and/or the fat content and/or the dry matter content of the fruit from the harvested field crop (15) and/or crop (7) at least on the basis of the crop flow data generated by the NIR sensor device (12), to carry out a comparison of the generated data with reference data and, based on the comparison, to generate control data for controlling an agricultural working process which is subsequent to the harvesting process.

4. The agricultural harvesting system (1) according to one of the preceding claims, **characterized in that** the offline data processing device (10) is configured to generate data regarding the crop yield of the harvested field crop (15) at least on the basis of the crop flow data generated by the NIR sensor device (12), to carry out a comparison of the generated data with reference data and, based on the comparison, to generate control data for controlling an agricultural working process which is subsequent to the harvesting process.

5. The agricultural harvesting system (1) according to one of the preceding claims, **characterized in that** the offline data processing device (10) is configured to generate data regarding the structural composition of the harvested field crop (15) and/or crop (7) at least on the basis of the crop flow data generated by the NIR sensor device (12), to carry out a comparison of the generated data with reference data and, based on the comparison, to generate control data for controlling an agricultural working process which is subsequent to the harvesting process.

6. The agricultural harvesting system (1) according to one of the preceding claims, **characterized in that** the offline data processing device (10) is configured to generate data regarding the dry matter content and/or the crude fibre content and/or crude ash content of the harvested field crop (15) and/or crop (7) at least on the basis of the crop flow data generated by the NIR sensor device (12), to carry out a comparison of the generated data with reference data and, based on the comparison, to generate control data for controlling an agricultural working process which is subsequent to the harvesting process.

7. The agricultural harvesting system (1) according to one of the preceding claims, **characterized in that** the offline data processing device (10) is configured to generate data regarding the volumetric energy density and/or gravimetric energy density of the harvested field crop (15) and/or crop (7) at least on the basis of the crop flow data generated by the NIR sensor device (12), to carry out a comparison of the generated data with reference data and, based on the comparison, to generate control data for controlling an agricultural working process which is subsequent to the harvesting process.

8. The agricultural harvesting system (1) according to one of the preceding claims, **characterized in that** the agricultural working process includes the following:
- selection of the seeds and/or selection of crop rotation for a subsequent sowing procedure, and/or
- selection of the seed quantity for a subsequent sowing procedure, and/or
- selection of the seed distribution for a field (4) which is to be sown subsequently, and/or
- control of the seed distribution on a field (4) during a subsequent sowing procedure, and/or
- selection of the fertilizer for a subsequent fertilization procedure, and/or
- selection of the quantity of fertilizer for a subsequent fertilization procedure, and/or
- selection of the distribution of fertilizer on a field (4) to be fertilized subsequently, and/or
- control of the distribution of fertilizer on a field (4) during a subsequent fertilization procedure, and/or
- selection of the type of soil cultivation for a field (4), and/or
- control of the at least one working assembly (17, 19, 20, 21) during soil cultivation of a field (4), and/or
- selection of the type of usage of the crop (7) passed through the conveying channel (14).

9. The agricultural harvesting system (1) according to one of the preceding claims, **characterized in that** the agricultural harvesting system (1) and/or the harvesting machine (2) furthermore has at least one agricultural working assembly (17, 19, 20, 27) which is configured to support or carry out agricultural work, as well as an adjustment unit (28) for of the respective working assembly (17, 19, 20, 27).

10. The agricultural harvesting system (1) according to claim 9, **characterized in that** the agricultural harvesting system (1) furthermore has an online data processing device (29) for controlling the respective working assembly (17, 19, 20, 27), which is configured, on the basis of crop flow data generated by the NIR sensor device (12) and corresponding to the constituents and/or properties measured by the NIR sensor (13), to generate
- control data, and/or
- data regarding the protein content and/or the type of protein and/or the sugar content and/or the starch content and/or the fat content and/or dry matter content of the group from the harvested field crop (15) and/or crop (7), and/or
- data regarding the harvest yield for the harvested field crop (15), and/or
- data regarding the structural composition of the harvested field crop (15) and/or crop (7), and/or
- data regarding the dry matter content and/or the crude fibre content and/or crude ash content of the harvested field crop (15) and/or crop (7), and/or
- data regarding the volumetric energy density and/or gravimetric energy density of the harvested field crop (15) and/or crop (7).

11. The agricultural harvesting system (1) according to claim 9 or claim 10, **characterized in that** the adjustment unit (28) is configured, at least on the basis of the control data or data from the online data processing device (29) and/or from the offline data processing device (10), to carry out at least one parameter adjustment of the respective working assembly (17, 19, 20, 27).

12. The agricultural harvesting system (1) according to one of claims 9 to 11, **characterized in that** the agricultural harvesting machine (2) has, as the working assembly (27), a secondary crushing means (27) for the crop (7) in the flow of crop (S), **in that** the online data processing device (29) and/or the offline data processing device (10) is configured to generate data regarding the dry matter content and/or starch content of the fruit from the harvested field crop (15), to carry out a comparison of the generated data with reference data and, based on the comparison, to generate the control data for carrying out the parameter adjustment for the secondary crushing means (27), and **in that** the adjustment unit (28) is configured to carry out the adjustment of the gap width and/or the drive output for the secondary crushing means (27) as the parameter adjustment.

13. The agricultural harvesting system (1) according to one of claims 9 to 12, **characterized in that** the agricultural harvesting machine (2) has a cutting assembly (17) as the working assembly (27), **in that** the online data processing device (29) and/or the offline data processing device (10) is configured to generate data regarding the crude fibre content of the harvested field crop (15), to carry out a comparison of the generated data with reference data and, based on the comparison, to generate the control data for carrying out the parameter adjustment for the cutting assembly (17), and **in that** the adjustment unit (28) is configured to carry out the adjustment of the cutting height of the crop (7) as the parameter adjustment.

14. The agricultural harvesting system (1) according to one of claims 9 to 13, **characterized in that** the agricultural harvesting machine (2) has a cutting assembly (17) as the working assembly (27), **in that** the online data processing device (29) and/or the offline data processing device (10) is configured to generate data regarding the crude ash content of the harvested field crop (15), to carry out a comparison of the generated data with reference data and, based on the comparison, to generate the control data for carrying out the parameter adjustment for the cutting assembly (17), and **in that** the adjustment unit (28) is configured to carry out the adjustment of the cutting height of the crop (7) as the parameter adjustment.

15. The agricultural harvesting system (1) according to one of claims 9 to 14, **characterized in that** the agricultural harvesting machine (2) has an intake device (19) and a chopper drum (20) as the working assembly (19, 20), **in that** the online data processing device (29) and/or the offline data processing device (10) is configured to generate data regarding the dry matter content of the harvested field crop (15), to carry out a comparison of the generated data with reference data and, based on the comparison, to generate the control data for carrying out the parameter adjustment of the intake device (19) and/or the chopper drum (20), and **in that** the adjustment unit (28) is configured to carry out the adjustment of the cutting length of the crop (7) as the parameter adjustment.

16. The agricultural harvesting system (1) according to one of claims 9 to 15, **characterized in that** the agricultural harvesting machine (2) has an intake device (19) and a chopper drum (20) as the working assembly (19, 20), **in that** the online data processing device (29) and/or the offline data processing device (10) is configured to generate data regarding the crude fibre content of the harvested field crop (15), to carry out a comparison of the generated data with reference data and, based on the comparison, to generate the control data for carrying out the parameter adjustment of the intake device (19) and/or the chopper drum (20), and **in that** the adjustment unit (28) is configured to carry out the adjustment of the cutting length for the crop (7) as the parameter adjustment.

17. The agricultural harvesting system (1) according to one of claims 10 to 16, **characterized in that** the data transmission unit (11) is further configured to transmit crop flow data generated by the NIR sensor device (12) and corresponding to the constituents and/or properties measured by the NIR sensor (13) to the online data processing device (29) in order to process the crop flow data in a manner that is temporally coupled to its generation and/or its reception.

18. The agricultural harvesting system (1) according to one of claims 10 to 17, **characterized in that** the online data processing device (29) is configured to generate control data for controlling an agricultural working process subsequent to the harvesting process at least on the basis of crop flow data generated by the NIR sensor device (12).

19. The agricultural harvesting system (1) according to one of the preceding claims, **characterized in that** it further comprises
- a camera (31) as a further sensor (30), wherein the sensor (30) or the camera (31) is configured to measure external properties of the flow of crop (S), and/or
- a positioning system (22), and the offline data processing device (10) and/or the online data processing device (29) is configured to allocate geodata generated by the positioning system (22) to the crop flow data and/or to process georeferenced crop flow data, and/or
- a display device (25) which is configured to display the crop flow data, the reference data, the control data and/or the geodata.

20. The agricultural harvesting system (1) according to one of the preceding claims, **characterized in that** the offline data processing device (10) and/or the online data processing device (29) is a component of the agricultural harvesting machine (2) and/or of a data processing centre (26) which is at a location remote from the agricultural harvesting machine (2).

21. A method for operating an agricultural harvesting system (1) according to claim 1, **characterized in that** the data transmission unit (11) transmits crop flow data generated by the NIR sensor device (12) and corresponding to the constituents and/or properties measured by the NIR sensor (13) to the offline data processing device (10) and the offline data processing device (10) processes the crop flow data in a manner which is temporally decoupled from its generation and/or its reception.

22. The method according to claim 21, **characterized in that** the online data processing device (29) for controlling the respective working assembly (17, 19, 20, 27) on the basis of crop flow data generated by the NIR sensor device (12) and corresponding to measured constituents and/or properties, and **in that** the adjustment unit (28) carries out the parameter adjustment of the respective working assembly (17, 19, 20, 27) on the basis of the control data.

## Revendications

1. Système de récolte agricole (1) comprenant une machine agricole de récolte (2), en particulier une ensileuse (3) qui comporte un canal d'alimentation (14) pour un flux de produit récolté (S) généré lors d'un processus de récolte par récolte d'une culture en champ (15) ainsi qu'un équipement de capteur NIR (12) avec un capteur NIR (13) qui est configuré pour détecter des composants et/ou des propriétés du flux de produit récolté (S), le flux de produit récolté (S) longeant le capteur NIR (13) dans le canal d'alimentation (14), **caractérisé en ce que** la machine agricole de récolte (2) comporte également une unité de transmission de données (11) qui est configurée pour transmettre les données de flux de produit récolté, qui sont générées par l'équipement de capteur NIR (12) et qui correspondent aux composants et/ou aux propriétés détectés par le capteur NIR (13), à un équipement de traitement de données hors ligne (10) et pour y traiter les données de flux de produit récolté de façon temporellement découplée de leur génération et/ou de leur réception.

2. Système de récolte agricole (1) selon la revendication 1, **caractérisé en ce que** l'équipement de traitement de données hors ligne (10) est configuré pour générer, au moins sur la base des données de flux de produit récolté générées par l'équipement de capteur NIR (12), des données sur la composition chimique du fruit de la culture en champ récoltée (15), pour effectuer une comparaison des données générées avec des données de référence et pour générer, sur la base de la comparaison, des données de commande aptes à commander un processus de travail agricole consécutif au processus de récolte.

3. Système de récolte agricole (1) selon la revendication 1 ou 2, **caractérisé en ce que** l'équipement de traitement de données hors ligne (10) est configuré pour générer, au moins sur la base des données de flux de produit récolté générées par l'équipement de capteur NIR (12), des données sur la teneur en albumine et/ou le type d'albumine et/ou la teneur en sucre et/ou la teneur en amidon et/ou la teneur en graisses et/ou la teneur en matière sèche du fruit de la culture en champ (15) et/ou du produit de récolte (7) récoltés, pour effectuer une comparaison des données générées avec des données de référence et pour générer, sur la base de la comparaison, des données de commande aptes à commander un processus de travail agricole consécutif au processus de récolte.

4. Système de récolte agricole (1) selon une des revendications précédentes, **caractérisé en ce que** l'équipement de traitement de données hors ligne (10) est configuré pour générer, au moins sur la base des données de flux de produit récolté générées par l'équipement de capteur NIR (12), des données sur le rendement de récolte de la culture en champ récoltée (15), pour effectuer une comparaison des données générées avec des données de référence et pour générer, sur la base de la comparaison, des données de commande aptes à commander un processus de travail agricole consécutif au processus de récolte.

5. Système de récolte agricole (1) selon une des revendications précédentes, **caractérisé en ce que** l'équipement de traitement de données hors ligne (10) est configuré pour générer, au moins sur la base des données de flux de produit récolté générées par l'équipement de capteur NIR (12), des données sur la composition structurelle de la culture en champ (15) et/ou du produit de récolte (7) récoltés, pour effectuer une comparaison des données générées avec des données de référence et pour générer, sur la base de la comparaison, des données de commande aptes à commander un processus de travail agricole consécutif au processus de récolte.

6. Système de récolte agricole (1) selon une des revendications précédentes, **caractérisé en ce que** l'équipement de traitement de données hors ligne (10) est configuré pour générer, au moins sur la base des données de flux de produit récolté générées par l'équipement de capteur NIR (12), des données sur la teneur en matière sèche et/ou la proportion de fibres brutes et/ou la proportion de cendres brutes de la culture en champ (15) et/ou du produit récolté (7) récoltés, pour effectuer une comparaison des données générées avec des données de référence et pour générer, sur la base de la comparaison, des données de commande aptes à commander un processus de travail agricole consécutif au processus de récolte.

7. Système de récolte agricole (1) selon une des revendications précédentes, **caractérisé en ce que** l'équipement de traitement de données hors ligne (10) est configuré pour générer, au moins sur la base des données de flux de produit récolté générées par l'équipement de capteur NIR (12), des données sur la densité énergétique volumétrique et/ou la densité énergétique gravimétrique de la culture en champ (15) et/ou du produit récolté (7) récoltés, pour effectuer une comparaison des données générées avec des données de référence et pour générer, sur la base de la comparaison, des données de commande aptes à commander un processus de travail agricole consécutif au processus de récolte.

8. Système de récolte agricole (1) selon une des revendications précédentes, **caractérisé en ce que** le processus de travail agricole inclut ce qui suit :
- la sélection de semences et/ou la sélection de la rotation des cultures pour une opération de semis ultérieure et/ou
- la sélection de la quantité de semences pour une opération de semis ultérieure et/ou
- la sélection de la répartition des semences dans un champ (4) à ensemencer ultérieurement et/ou
- la commande sélection de la répartition des semences dans un champ (4) pendant une opération de semis ultérieure et/ou
- la sélection de fertilisant pour une opération de fertilisation ultérieure et/ou
- la sélection de la quantité de fertilisant pour une opération de fertilisation ultérieure et/ou
- la sélection de la répartition du fertilisant dans un champ (4) à fertiliser ultérieurement et/ou
- la commande de la répartition du fertilisant dans un champ (4) pendant une opération de fertilisation ultérieure et/ou
- la sélection du type de travail du sol d'un champ (4) et/ou
- la commande au moins d'un organe de travail agricole (17, 19, 20, 21) pendant un travail du sol d'un champ (4) et/ou
- la sélection du type d'utilisation du produit récolté (7) traversant le canal d'alimentation (14) .

9. Système de récolte agricole (1) selon une des revendications précédentes, **caractérisé en ce que** le système de récolte agricole (1) et/ou la machine de récolte (2) comportent également au moins un organe de travail agricole (17, 19, 20, 27) qui est configuré pour faciliter ou effectuer du travail agricole, ainsi qu'une unité de réglage (28) pour un réglage paramétrique de l'organe de travail respectif (17, 19, 20, 27).

10. Système de récolte agricole (1) selon la revendication 9, **caractérisé en ce que** le système de récolte agricole (1) comporte également un équipement de traitement de données en ligne (29) pour la commande de l'organe de travail respectif (17, 19, 20, 27), lequel est configuré pour générer, sur la base de données de flux de produit récolté qui sont générées par l'équipement de capteur NIR (12) et qui correspondent aux composants et/ou aux propriétés détectés par le capteur NIR (13),
- des données de commande et/ou
- des données sur la teneur en albumine et/ou le type d'albumine et/ou la teneur en sucre et/ou la teneur en amidon et/ou la teneur en graisses et/ou la teneur en matière sèche du fruit de la culture en champ (15) et/ou du produit récolté (7) récoltés et/ou
- des données sur la composition structurelle de la culture en champ (15) et/ou du produit récolté (7) récoltés et/ou
- des données sur la teneur en matière sèche et/ou la proportion de fibres brutes et/ou la proportion de cendres brutes de la culture en champ (15) et/ou du produit récolté (7) récoltés et/ou
- des données sur la densité énergétique volumétrique et/ou la densité énergétique gravimétrique de la culture en champ (15) et/ou du produit récolté (7) récoltés.

11. Système de récolte agricole (1) selon la revendication 9 ou 10, **caractérisé en ce que** l'unité de réglage (28) est configurée pour effectuer, au moins sur la base des données de commande, respectivement de l'équipement de traitement de données en ligne (29) et/ou de l'équipement de traitement de données hors ligne (10), au moins un réglage paramétrique de l'organe de travail respectif (17, 19, 20, 27).

12. Système de récolte agricole (1) selon une des revendications 9 à 11, **caractérisé en ce que** la machine agricole de récolte (2) comprend comme organe de travail (27) un dispositif de broyage secondaire (27) pour le produit récolté (7) dans le flux de produit récolté (S), **en ce que** l'équipement de traitement de données en ligne (29) et/ou l'équipement de traitement de données hors ligne (10) sont configurés pour générer des données sur la teneur en matière sèche et/ou sur la proportion d'amidon du fruit de la culture en champ récoltée (15), pour effectuer une comparaison des données générées avec des données de référence et, sur la base de la comparaison, pour générer les données de commande aptes à réaliser le réglage paramétrique du dispositif de broyage secondaire (27), et **en ce que** l'unité de réglage (28) est configurée pour réaliser, comme réglage paramétrique, le réglage de la largeur d'intervalle et/ou de la puissance d'entraînement du dispositif de broyage secondaire (27).

13. Système de récolte agricole (1) selon une des revendications 9 à 12, **caractérisé en ce que** la machine agricole de récolte (2) comporte comme organe de travail (17) un tablier de coupe (17), **en ce que** l'équipement de traitement de données en ligne (29) et/ou l'équipement de traitement de données hors ligne (10) sont configurés pour générer des données sur la proportion de fibres brutes de la culture en champ récoltée (15), pour effectuer une comparaison des données générées avec des données de référence et, sur la base de la comparaison, pour générer les données de commande aptes à réaliser le réglage paramétrique du tablier de coupe (17), et **en ce que** l'unité de réglage (28) est configurée pour réaliser, comme réglage paramétrique, le réglage de la hauteur de coupe du produit récolté (7).

14. Système de récolte agricole (1) selon une des revendications 9 à 13, **caractérisé en ce que** la machine agricole de récolte (2) comporte comme organe de travail (17) un tablier de coupe (17), **en ce que** l'équipement de traitement de données en ligne (29) et/ou l'équipement de traitement de données hors ligne (10) sont configurés pour générer des données sur la proportion de cendres brutes de la culture en champ récoltée (15), pour effectuer une comparaison des données générées avec des données de référence et, sur la base de la comparaison, pour générer les données de commande aptes à réaliser le réglage paramétrique du tablier de coupe (17), et **en ce que** l'unité de réglage (28) est configurée pour réaliser, comme réglage paramétrique, le réglage de la hauteur de coupe du produit récolté (7).

15. Système de récolte agricole (1) selon une des revendications 9 à 14, **caractérisé en ce que** la machine agricole de récolte (2) comporte comme organes de travail (19, 20) un équipement d'amenée (19) et un rotor de hachage (20), **en ce que** l'équipement de traitement de données en ligne (29) et/ou l'équipement de traitement de données hors ligne (10) sont configurés pour générer des données sur la teneur en matière sèche de la culture en champ récoltée (15), pour effectuer une comparaison des données générées avec des données de référence et, sur la base de la comparaison, pour générer les données de commande aptes à réaliser le réglage paramétrique de l'équipement d'amenée (19) et/ou du rotor de hachage (20), et **en ce que** l'unité de réglage (28) est configurée pour réaliser, comme réglage paramétrique, le réglage de la longueur de coupe du produit récolté (7) .

16. Système de récolte agricole (1) selon une des revendications 9 à 15, **caractérisé en ce que** la machine agricole de récolte (2) comporte comme organes de travail (19, 20) un équipement d'amenée (19) et un rotor de hachage (20), **en ce que** l'équipement de traitement de données en ligne (29) et/ou l'équipement de traitement de données hors ligne (10) sont configurés pour générer des données sur la proportion de fibres brutes de la culture en champ récoltée (15), pour effectuer une comparaison des données générées avec des données de référence et, sur la base de la comparaison, pour générer les données de commande aptes à réaliser le réglage paramétrique de l'équipement d'amenée (19) et/ou du rotor de hachage (20), et **en ce que** l'unité de réglage (28) est configurée pour réaliser, comme réglage paramétrique, le réglage de la longueur de coupe du produit récolté (7) .

17. Système de récolte agricole (1) selon une des revendications 10 à 16, **caractérisé en ce que** l'unité de transmission de données (11) est également configurée pour transmettre des données de flux de produit récolté, qui sont générées par l'équipement de capteur NIR (12) et qui correspondent aux composants et/ou aux propriétés détectés par le capteur NIR (13), à l'équipement de traitement de données en ligne (29) pour traiter les données de flux de produit récolté de façon temporellement couplée à leur génération et/ou à leur réception.

18. Système de récolte agricole (1) selon une des revendications 10 à 17, **caractérisé en ce que** l'équipement de traitement de données en ligne (29) est configuré pour générer, au moins sur la base des données de flux de produit récolté générées par l'équipement de capteur NIR (12), des données de commande aptes à commander un processus de travail agricole consécutif au processus de récolte.

19. Système de récolte agricole (1) selon une des revendications précédentes, **caractérisé en ce qu'**il comporte également
- comme autre capteur (30), une caméra (31), le capteur (30), respectivement la caméra (31) étant configuré pour détecter des propriétés extérieures du flux de produit récolté (S), et/ou
- un système de localisation (22), et l'équipement de traitement de données hors ligne (10) et/ou l'équipement de traitement de données en ligne (29) étant configuré pour associer aux données de flux de produit récolté des données géographiques générées par le système de localisation (22) et/ou des données de flux de produit récolté géoréférencées, et/ou
- un équipement d'affichage (25) qui est configuré pour afficher les données de flux de produit récolté, les données de référence, les données de commande et/ou les données géographiques.

20. Système de récolte agricole (1) selon une des revendications précédentes, **caractérisé en ce que** l'équipement de traitement de données hors ligne (10) et/ou l'équipement de traitement de données en ligne (29) font partie intégrante de la machine agricole de récolte (2) et/ou d'un centre de traitement de données (26) distant spatialement de la machine agricole de récolte (2).

21. Procédé pour exploiter un système de récolte agricole (1) selon la revendication 1, **caractérisé en ce que** l'unité de transmission de données (11) transmet à l'équipement de traitement de données hors ligne (10) des données de flux de produit récolté qui sont générées par l'équipement de capteur NIR (12) et qui correspondent aux composants et/ou aux propriétés détectés par le capteur NIR (13), et l'équipement de traitement de données hors ligne (10) traite les données de flux de produit récolté de façon temporellement découplée de leur génération et/ou de leur réception.

22. Procédé selon la revendication 21, **caractérisé en ce que** l'équipement de traitement de données en ligne (29) génère, pour la commande de l'organe de travail respectif (17, 19, 20, 27), sur la base de données de flux de produit récolté qui sont générées par l'équipement de capteur NIR (12) et qui correspondent aux composants et/ou aux propriétés détectés par le capteur NIR (13), et **en ce que** l'unité de réglage (28) effectue, au moins sur la base des données de commande, un réglage paramétrique de l'organe de travail respectif (17, 19, 20, 27).
